# EUROPÄISCHE PATENTSCHRIFT

(11) **EP 2 019 234 B1**
(45) Veröffentlichungstag und Bekanntmachung des Hinweises auf die Patenterteilung: **13.03.2013**
(21) Anmeldenummer: 08159608.2
(22) Anmeldetag: 03.07.2008
(51) Int. Cl.: F16H 61/06

(54) **Verfahren zum Betreiben eines Automatgetriebes eines Fahrzeuges**
Method for operating an automatic gear switch of a vehicle
Procédé destiné au fonctionnement d'une boîte de vitesse automatique d'un véhicule

(30) Priorität: 27.07.2007 DE 102007035298
(43) Veröffentlichungstag der Anmeldung: 28.01.2009
(73) Patentinhaber: ZF Friedrichshafen AG, 88038 Friedrichshafen (DE)
(72) Erfinder: Wiest, Wolfgang, 88456, Ingoldingen (DE); Vollmar, Reinhard, 88214, Ravensburg (DE); Steinhauser, Klaus, 88079, Kressbronn (DE); Morbitzer, Dirk, 88214, Ravensburg (DE)

(56) Entgegenhaltungen:
- DE-A1- 4 240 621
- DE-A1- 4 405 806
- DE-A1- 4 424 456
- DE-A1- 19 942 555
- DE-A1-102007 010 942

## Beschreibung

Die Erfindung betrifft ein Verfahren zum Betreiben eines Automatgetriebes eines Fahrzeugs gemäß der im Oberbegriff des Patentanspruchs 1 näher definierten Art.

Bei den aus der Praxis bekannten Automatgetrieben treten Schaltqualitätseinbußen auf oder es werden Überwachungsfunktionen ausgelöst, da Schaltelemente bzw. deren Kolbenräume bei längerer Nichtbetätigung eines Schaltelementes aufgrund von Leckagen leer laufen und Druckansteuerungen solcher Schaltelemente während einer Wiederaufnahme einer Betätigung nicht zu den gewünschten Übertragungsfähigkeiten der Schaltelemente innerhalb vordefinierter Zeiträume führen.

Aus der DE 197 55 064 B4 ist eine Fluiddruck-Steuervorrichtung für ein Kraftfahrzeug bekannt, das einen Motor und ein Automatgetriebe aufweist. Das Automatgetriebe ist mit mehreren Schaltelementen bzw. Reibelementen ausgeführt, die aufgrund von angelegten Arbeitsfluiddrücken bzw. Betätigungsdrücken zwischen einer eingerückten und einer ausgerückten Stellung betätigbar sind. Die Schaltelemente sind in eingerücktem Zustand geschlossen und in ausgerücktem Zustand vollständig geöffnet, wobei die Übertragungsfähigkeit zwischen diesen beiden Extremzuständen in Abhängigkeit des jeweils anliegenden Betätigungsdruckes stufenlos variierbar ist.

Ein Automatgetriebe-Steuersystem weist einen Digitalcomputer auf, mittels welchem verschiedene Steuerungen einschließlich einer Schaltsteuerung, einer Leitungsdrucksteuerung, einer Überbrückungssteuerung und einer Motorbremse-Steuerung auf der Grundlage verschiedener Betriebszustände des Motors und des Automatgetriebes ausgeführt werden. Die Automatgetriebe-Steuereinheit ist dabei derart programmiert, dass auf ausgerückte Reibelemente vorübergehend ein Fluiddruck ausgeübt wird, um Luftblasen aus dem Hydraulikkreislauf abzuführen. Sind verschiedene Einstiegsbedingungen erfüllt, wird eine so genannte Luftabführsteuerung ausgeführt. Dabei ist ein Belastungsbetrieb zum Ändern des Übersetzungsverhältnisses vorgesehen, während dem von einer ersten Getriebestellung, die beispielsweise einem ersten Gang entspricht, in eine höhere Getriebestellung, die einem zweiten, einem dritten oder einem vierten Gang entspricht und die während einer Dauer t₁ gehalten wird, und dann von der höheren Getriebestellung wieder zurück zur ersten Getriebestellung gewechselt wird, wobei der Wechsel in vorgegebenen Zeitintervallen t₂ wiederholt wird, um Luftblasen aus dem Hydraulikkreis abzuführen. Die Dauer t₁ ist kürzer als die Dauer, die der Hub des Kupplungskolben für einen gewünschten Fluiddruck benötigt. Das Zeitintervall t₂ ist ausreichend lang, damit der Kupplungskolben in seine Anfangsposition zurückkehren kann, falls sich der Kupplungskolben bewegt.

Diese Ansteuerung der ausgerückten Reibelemente bzw. Schaltelemente wird entweder im Fahrzeugstillstand oder in entsprechend abgewandelter Art und Weise auch dann durchgeführt, wenn kein Schaltvorgang erfolgt und das Fahrzeug fährt.

Nachteilig dabei ist jedoch, dass ein Kupplungskolben bzw. ein Kolbenelement eines in der vorbeschriebenen Art und Weise betätigten Schaltelementes während dem Ausführen von Luftansammlungen aus einem Kolbenraum aus einer ersten Endstellung, in der das Schaltelement vollständig geöffnet ist, in Richtung einer zweiten Endstellung, in der das Schaltelement vollständig geschlossen ist, bewegt wird. Dadurch steigen Schleppmomente im Bereich des Schaltelementes in unerwünschtem Umfang an.

Des Weiteren besteht nachteilhafterweise die Möglichkeit, dass eine Übertragungsfähigkeit eines geöffneten bzw. ausgerückten Schaltelementes aufgrund der Kolbenbewegung in einem derartigen Umfang ansteigt, dass zumindest teilweise eine Lastübernahme im Bereich des ausgerückten Schaltelementes vorliegt und unerwünschte Betriebszustände im Automatgetriebe vorliegen.

Letztgenannte Betriebszustandsverläufe verursachen während der zeitlich begrenzten Veränderung der Getriebestellung von der ersten Getriebestellung in eine höhere Getriebestellung und dem sich wiederum daran anschließenden Wechsel von der höheren Getriebestellung in die erste Getriebestellung undefinierte Betriebszustände in einem Getriebe, da die zur Darstellung der ersten Getriebestellung zu betätigenden Schaltelemente während der veränderten Ansteuerung der Schaltelemente des Automatgetriebes nicht in erforderlichem Umfang mit Betätigungsdruck beaufschlagt werden.

Die DE 199 42 555 A1 offenbart ein Verfahren nach dem Oberbegriff des Anspruchs 1 und schlägt ein Verfahren zur Druckansteuerung wenigstens eines rotierenden Schaltelementes eines Automatgetriebes, insbesondere eines Lastschaltautomatgetriebes, eines Kraftfahrzeuges vor. Dabei ist das Schaltelement mit einem mit Drehübertragungselementen zusammenwirkenden Kolben und einer Druckmittelzuführung ausgebildet, durch welche der Kolben zur Verschiebung in eine für einen aktivierten Zustand des Schaltelementes definierte Stellung mit Druckmittel beaufschlagbar ist. In einem deaktivierten Zustand des Schaltelementes wird in Abhängigkeit einer Verweilzeit in die Druckmittelzuführung ein derart dimensionierter wiederkehrender Druckmittelimpuls eingeleitet, dass der Kolben insgesamt in einer für den deaktivierten Zustand des Schaltelementes definierten Stellung bleibt. Der Druckmittelzuführung einer deaktivierten Kupplung wird nach einer längeren Deaktivierung, welche einer applizierbaren Verweilzeit entspricht, zyklisch wiederkehrend ein Druckmittelimpuls mit einem Druck über eine Zeit zugeführt, durch den die Druckmittelzuführung auch bei auftretender Leckage befüllt bleibt.

Mit einer geeigneten Applikation der Zeit und des Druckes für die zyklisch wiederkehrenden Druckmittelimpulse werden eine Verschiebung des Kolbens der Kupplung und ein Zusammenpressen des Kupplungspaketes mit einer damit einhergehenden Momentübernahme verhindert. Dabei werden bei der Applizierung des Druckes, der Zeit des Druckmittelimpulses, die Verweilzeit, eine Öltemperatur und ein Lüftspiel des Schaltelementes berücksichtigt. Damit ist der Druckmittelimpuls derart dimensionierbar, dass der Kolben des Schaltelementes in einer für den deaktivierten Zustand der Kupplung definierten Stellung bleibt. Dabei wird als Verweilzeit eine Zeitspanne von drei Sekunden und für die Dauer des Druckmittelimpulses eine Zeitdauer von 100 Millisekunden vorgegeben. Der Druck und die Zeitdauer des Druckmittelimpulses entsprechen dabei den Werten eines Schnellfülldruckes und einer Schnellfüllzeit.

Die Beaufschlagung eines Schaltelementes mit einem Schnellfülldruck über eine Schnellfüllzeit zu einer Verschiebung eines Kolbenelementes in Richtung eines Lamellenpaketes einer Lamellenkupplung bzw. einer Lamellenbremse führt unter Umständen in unerwünschtem Umfang zu einem derartigen Anstieg der Übertragungsfähigkeit des Schaltelementes, dass im Bereich dieses Schaltelementes eine wenigstens teilweise Lastübernahme auftritt, was eine Beeinträchtigung eines Fahrkomforts zu Folge hat.

Der vorliegenden Erfindung liegt daher die Aufgabe zugrunde, ein Verfahren zum Betreiben eines Automatgetriebes eines Fahrzeuges zur Verfügung zu stellen, mittels welchem ein Leerlaufen von nicht betätigten hydraulisch ansteuerbaren Schaltelementen eines Automatgetriebes auf einfache und kostengünstige Art und Weise ohne Beeinträchtigung einer Betriebsweise eines Automatgetriebes bei hohem Fahrkomfort vermeidbar ist.

Erfindungsgemäß wird diese Aufgabe mit einem Verfahren mit den Merkmalen des Patentanspruchs 1 gelöst.

Bei dem erfindungsgemäßen Verfahren zum Betreiben eines Automatgetriebes eines Fahrzeuges mit mehreren reibschlüssigen Schaltelementen, deren Übertragungsfähigkeiten in Abhängigkeit von über ein Hydrauliksystem einstellbaren Betätigungsdrücken variierbar sind, mittels welchen jeweils ein Kolbenelement eines Schaltelementes entgegen der Federkraft einer Federeinrichtung und einer an dem Kolbenelement angreifenden Reibkraft ausgehend von einer zu einem geöffneten Zustand des Schaltelementes äquivalenten ersten Endstellung in Richtung einer zu einem geschlossenen Zustand des Schaltelementes äquivalenten zweiten Endstellung verschiebbar ist, ist jeweils wenigstens ein Teil der Schaltelemente zur Darstellung eines angeforderten Betriebszustandes des Automatgetriebes mit dem dafür vorgesehenen Betätigungsdruck beaufschlagt und weist eine damit korrespondierende Übertragungsfähigkeit auf. Der andere Teil der Schaltelemente wird im Wesentlichen mit Betätigungsdrücken beaufschlagt, zu den deren Übertragungsfähigkeiten gleich Null sind und zu den diese jeweils in geöffnetem Zustand vorliegen.

Erfingdungsgemäß wird der Betätigungsdruck wenigstens eines Schaltelementes der in geöffnetem Zustand vorliegenden Schaltelemente zumindest für eine Zeitdauer mit einem Druckfüllwert kleiner als ein Fülldruck einer Füllausgleichsphase beaufschlagt und anschließend wieder auf ein zu dem geöffneten Zustand des Schaltelementes äquivalentes Druckniveau abgesenkt, wenn das Kolbenelement des betreffenden Schaltelementes sich in einer ersten Endstellung befindet. Darüber hinaus greift bei an einer Wirkfläche des Kolbenelementes anliegendem Druckfüllwert an dem Kolbenelement eine aus dem Druckfüllwert, der Federkraft und der Reibkraft resultierende Gesamtkraftkomponente an, dass eine Bewegung des Kolbenelementes ausgehend von seiner ersten Endlage in Richtung seiner zweiten Endlage im Wesentlichen unterbleibt, wobei das zu dem geöffneten Zustand des Schaltelementes äquivalente Volumen eines Kolbenraumes des Schaltelementes nach Ablauf der Zeitdauer wenigstens annähernd vollständig mit Hydraulikfluid befüllt ist.

Während des erfindungsgemäßen Verfahrens wird ein Leerlaufen eines nicht an der Darstellung eines aktuell angeforderten Betriebszustandes beteiligten Schaltelementes dadurch vermieden, dass das Schaltelement zumindest zeitweise mit einem Betätigungsdruck beaufschlagt wird, zu dem die Restrückstellkraft eines Federpakets der an dem Kolbenelement angreifenden Federeinrichtung des Schaltelementes zuzüglich der zur Verschiebung des Kolbenelementes ausgehend von seiner ersten Endstellung in Richtung seiner zweiten Endstellung zu überwindenden Reibkraft von der von dem Betätigungsdruck erzeugten Druckkraft nicht überschritten werden, eine Verschiebung des Kolbenelementes des Schaltelementes während der so genannten Nachbefüllung des nicht betätigten Schaltelementes sicher vermieden ist und der Kolbenraum nach Ablauf der Zeitdauer vollständig befüllt ist. Damit wird auf einfache und kostengünstige Art und Weise der Betätigungsdruck zur Nachbefüllung des nicht betätigten Schaltelementes gegenüber einem zu dem geöffneten Zustand des Schaltelementes äquivalenten Druckniveau erhöht, ohne dass das für ein geringes Schleppmoment notwendige Lüftspiel zwischen Lamellen eines vorzugsweise als reibschlüssige Kupplung oder Bremse ausgeführten Schaltelementes reduziert und das Schleppmoment nicht in unzulässigem Umfang erhöht wird, womit ein Gesamtwirkungsgrad eines Automatgetriebes nicht negativ beeinflusst wird.

Des Weiteren werden durch den erfindungsgemäßen Betrieb eines Automatgetriebes Schaltqualitätseinbußen sowie das Auslösen von Überwachungsfunktionen aufgrund von Schaltelementen, die nach längerer Nichtbetätigung leer laufen und bei welchen eine durch eine Zuschaltanforderung ausgelöste Druckansteuerung eines solchen Schaltelementes nicht den gewünschten Anstieg der Übertragungsfähigkeit des Schaltelementes zur Folge hat, auf einfache Art und Weise dadurch vermieden, dass ein Schaltelement im nicht betätigten Zustand derart angesteuert und zeitweise mit einem derartigen Druckwert beaufschlagt wird, dass solche Schaltelemente dauerhaft eine ausreichende Befüllung aufweisen und ein sich an die nicht betätigte Betriebsphase des Schaltelementes anschließender Befüllvorgang in gewünschtem Umfang durchführbar ist.

Bei einer vorteilhaften Variante des erfindungsgemäßen Verfahrens wird das wenigstens eine Schaltelement der in geöffnetem Zustand vorliegenden Schaltelemente mit einem einem Grunddruckniveau des Hydrauliksystems entsprechenden Betätigungsdruck beaufschlagt, das kleiner als der Druckfüllwert ist. Damit werden Schaltelemente auch im nicht betätigten Zustand mit einem geringen Druckwert, dem so genannten Vorbefülldruck, beaufschlagt, um eine Leerlaufphase der Schaltelemente im nicht betätigten Zustand auf einfache Art und Weise während ungünstigen Betriebszuständen zumindest zu verlängern und während günstigen Betriebzuständen zu vermeiden. Eine derartige hydraulische Vorbefüllung ist beispielsweise durch ein Entleerventil in einem so genannten Entleerkanal der Schaltelemente realisierbar, wobei eine Einstellung eines Gegendruckes im Bereich des Entleerventils mittels einer Druckfeder durchführbar ist.

Eine solche Vorbefüllung ist vorteilhafterweise derart ausgelegt, dass eine Rückstellkraft einer Federeinrichtung eines Schaltelementes ausreichend groß ist, um ein Kolbenelement eines Schaltelementes in seine erste Endstellung zu verschieben, wobei von der Federkraft einer Federeinrichtung neben dem Vorbefülldruck bzw. dem Grunddruckniveau vom Hydrauliksystem zusätzlich auch die beim Zurückschieben des Kolbenelementes in seine erste Endlage auftretende Reibkraft zu überwinden ist.

Bei einer weiteren vorteilhaften Variante des Verfahrens nach der Erfindung wird das wenigstens eine Schaltelement der in geöffnetem Zustand vorliegenden Schaltelemente nach Ablauf eines vorgebbaren Zeitraumes wiederum für eine vorgebbare Zeitdauer mit dem Druckfüllwert beaufschlagt und der Betätigungsdruck nach Ablauf der Zeitdauer auf ein dem geöffneten Zustand des Schaltelementes äquivalentes Druckniveau eingestellt. Mit dieser Vorgehensweise wird das Leerlaufen eines über einen längeren Zeitraum nicht betätigten Schaltelementes wirksam vermieden. Darüber hinaus wird durch das Unterbrechen der erhöhten Druckbeaufschlagung des Schaltelementes mit dem Druckfüllwert ein Verschieben des Kolbenelementes vermieden und ein Verlassen des geöffneten Zustandes des Schaltelementes auf einfache Art und Weise umgangen.

Die Zeitdauer und/oder der Zeitraum werden bei weiteren vorteilhaften Varianten des erfindungsgemäßen Verfahrens in Abhängigkeit verschiedener Betriebszustandsparameter des Automatgetriebes und/oder in Abhängigkeit einer Lebensbetriebsdauer des Automatgetriebes und/oder des betreffenden Schaltelementes adaptiert, um beispielsweise eine verschleißbedingte oder temperaturbedingte Abhängigkeit des Befüllvorganges des Schaltelementes berücksichtigen zu können.

Wiederum bei einer weiteren vorteilhaften Variante des erfindungsgemäßen Verfahrens ist im Betrieb des Automatgetriebes eine Überwachungsfunktion aktiviert, mittels der jeweils ein Befüllzustand der Schaltelemente bestimmbar ist, wobei bei Ermittlung eines Füllgrades eines geöffneten Schaltelementes, der kleiner als ein vorgebbarer Schwellwert ist, der Betätigungsdruck des Schaltelementes für die Zeitdauer auf den Druckfüllwert angehoben wird. Das bedeutet, dass ein so genannter Nachbefüllvorgang im nicht betätigten Zustand eines Schaltelementes in Abhängigkeit eines Füllgrades durchgeführt wird, der mittels einer modellhaften Nachbildung des Entleerverhaltens eines Schaltelementes bzw. der Schaltelemente ermittelt wird. Dabei werden die hydraulischen Betätigungen eines Schaltelementes, wie das Befüllen und das Entleeren eines Kolbenraumes des Schaltelementes, mittels eines Volumenmodells bzw. eines Kolbenpositionsmodells theoretisch abgebildet. Ein Kolbenraum eines nicht betätigten Schaltelementes wird bei Erreichen eines Schwellwerts des Befüllgrades über eine zeitweise Nachbefüllung, die der vorgeschlagenen erfindungsgemäßen Vorgehensweise entsprechend abläuft, befüllt.

Dabei kann es vorgesehen sein, den Schwellwert des Füllgrades eines geöffneten Schaltelementes bzw. die Schwellwerte der Befüllzustände der geöffneten Schaltelemente in Abhängigkeit applizierbarer Offsets zu verändern, um die Nachbefüllung jeweils an den aktuell vorliegenden Betriebszustand des Automatgetriebes anpassen zu können.

Der Druckfüllwert entspricht bei einer vorteilhaften Variante des erfindungsgemäßen Verfahrens dem Produkt aus einem vorgebbaren Faktor und dem vorzugsweise betriebszustandsabhängig variierenden Fülldruck während einer Füllausgleichphase eines Schaltelementes.

Alternativ oder in Kombination hierzu wird der Druckfüllwert bei weiteren Varianten des Verfahrens nach der Erfindung in Abhängigkeit verschiedener Betriebszustandsparameter des Automatgetriebes, beispielsweise einer Getriebeöltemperatur, ermittelt.

Darüber hinaus ist es bei einer weiteren Variante des erfindungsgemäßen Verfahrens vorgesehen, dass der Druckfüllwert als Absolutwert mit zusätzlicher Begrenzung auf einen Maximalwert, der vorzugsweise dem Fülldruck entspricht, vorgegeben wird.

Weitere Vorteile und vorteilhafte Weiterbildungen der Erfindung ergeben sich aus den Patentansprüchen und dem unter Bezugnahme auf die Zeichnung prinzipmäßig beschriebenen Ausführungsbeispiel.

Es zeigt:
- Fig. 1: ein stark verkürzt dargestelltes Ablaufdiagramm des erfindungsgemäßen Verfahrens; und
- Fig. 2: mehrere Verläufe verschiedener Betriebszustandsparameter eines Schaltelementes eines Automatgetriebes, welche sich bei Anwendung des erfindungsgemäßen Verfahrens einstellen.

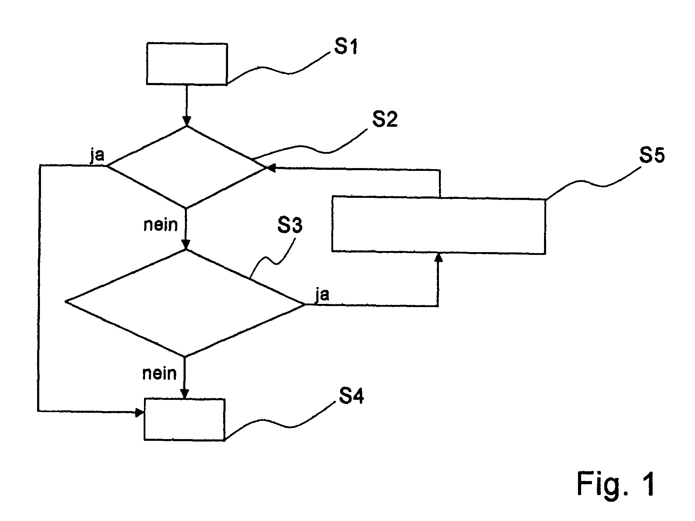

Fig. 1 zeigt ein stark verkürztes Ablaufschema des Verfahrens nach der Erfindung, welches während eines Schrittes S1 durch Aktivieren einer Zündung eines Kraftfahrzeuges und einer damit einhergehenden Inbetriebnahme des Kraftfahrzeuges gestartet wird.

In Abhängigkeit einer Anforderung eines bestimmten Betriebszustandes eines Automatgetriebes des Kraftfahrzeuges werden verschiedene vorliegend als reibschlüssige Lamellenkupplungen und -bremsen ausgeführte reibschlüssige Schaltelemente mit den für die Darstellung des angeforderten Betriebszustandes des Automatgetriebes erforderlichen Betätigungsdrücken über ein Hydrauliksystem beaufschlagt. Dabei wird ein Teil der Schaltelemente in Abhängigkeit des angeforderten Betriebszustandes des Automatgetriebes in einen geschlossenen Zustand überführt, während der andere Teil der Schaltelemente in geöffnetem Zustand verbleibt.

Gleichzeitig wird eine Überwachungsfunktion aktiviert, mittels der jeweils ein Befüllzustand der Schaltelemente bestimmbar ist, wobei ein jeweiliger Befüllgrad eines Schaltelementes mittels eines Volumen modells bzw. eines Kolbenpositionsmodells rechnerisch ermittelt wird. Während eines sich an den Schritt S1 anschließenden Überprüfungsschrittes S2 wird verifiziert, ob eine Anforderung für eine Schaltung vorliegt.

Das erfindungsgemäße Verfahren wird bei positivem Abfrageergebnis beendet und bei negativem Abfrageergebnis des Überprüfungsschrittes S2 wird während eines weiteren Überprüfungsschrittes S3 verifiziert, ob ein Leerlaufen eines der nicht betätigten bzw. in geöffnetem Zustand vorliegenden Schaltelemente zu erwarten ist, wobei das Verfahren bei negativem Abfrageergebnis des Schrittes S3 während eines Schrittes S4 beendet wird. Wird während des Schrittes S3 ein mögliches Leerlaufen eines oder mehrerer der in geöffnetem Zustand bzw. in nicht betätigtem Zustand vorliegenden Schaltelemente erkannt, wird zu einem Schritt S5 verzweigt, während dem eines der nicht betätigten oder in geöffnetem Zustand vorliegenden Schaltelemente oder mehrere dieser Schaltelemente bei überwachungsfunktionsseitiger Ermittlung eines Füllgrades des Schaltelementes oder von Füllgraden der Schaltelemente kleiner als ein Schwellwert bzw. kleiner als Schwellwerte zumindest für eine Zeitdauer mit einem Druckfüllwert kleiner als ein Fülldruck einer Füllausgleichsphase des oder der Schaltelemente beaufschlagt und anschließend wieder auf ein zu dem geöffneten Zustand des Schaltelementes oder der Schaltelemente äquivalentes Druckniveau abgesenkt.

Der dem Druckfüllwert entsprechende Betätigungsdruck eines Schaltelementes liegt an einer Wirkfläche des Kolbenelementes des Schaltelementes an und wirkt einer Federkraft einer Federeinrichtung und einer an dem Kolbenelement angreifenden Reibkraft, die einer Bewegung des Kolbenelementes ausgehend von der ersten Endstellung in Richtung einer zu einem geschlossenen Zustand des Schaltelementes äquivalenten zweiten Endstellung entgegen. Bei an der Wirkfläche des Kolbenelementes anliegendem Druckfüllwert greift an dem Kolbenelement eine aus dem Druckfüllwert, der Federkraft und der Reibkraft resultierende Gesamtkraftkomponente an, dass eine Bewegung des Kolbenelementes ausgehend von seiner ersten Endlage in Richtung seiner zweiten Endlage im Wesentlichen unterbleibt. Das zu dem geöffneten Zustand des Schaltelementes äquivalente Volumen eines Kolbenraumes des Schaltelementes ist nach Ablauf der Zeitdauer vollständig mit Hydraulik befüllt und eventuell im Schaltelement vorhandene Luftansammlungen sind vollständig aus dem Kolbenraum entfernt.

Anschließend wird vom Schritt S5 zum Überprüfungsschritt S2 zurückverzweigt und ein weiteres Mal die Überprüfung im Schritt S2 und daran anschließend die Überprüfung im weiteren Überprüfungsschritt S3 durchgeführt, bevor eine erneute Nachbefüllung eines nicht betätigten oder mehrerer nicht betätigter Schaltelemente des Automatgetriebes in der vorbeschriebenen Art und Weise zumindest für die Zeitdauer mit einem Betätigungsdruck auf dem Niveau des Druckfüllwertes während des erneut aufgerufenen Schrittes S5 durchgeführt wird.

Die Schaltelemente des Automatgetriebes werden über das Hydrauliksystem des Automatgetriebes in nicht betätigtem Zustand permanent mit einem Betätigungsdruck bzw. mit einem einem Grunddruckniveau des Hydrauliksystems entsprechenden Betätigungsdruck beaufschlagt, der kleiner als der Druckfüllwert ist. Dieses Grunddruckniveau wird über ein federbelastetes Ventil eingestellt und soll ein vollständiges Leerlaufen des Hydrauliksystems des Automatgetriebes vermeiden.

Dennoch besteht bei ungünstiger Toleranzlage der Bauteile eines Schaltelementes und bei entsprechend langer Verweildauer in einem nicht betätigten bzw. nicht druckbeaufschlagten Zustand eines Schaltelementes aufgrund von Temperatureinflüssen und einer internen Drehzahl eines Schaltelementes trotz der hydraulischen Vorbefüllung auf dem Grunddruckniveau des Hydrauliksystems eines Schaltelementes die Möglichkeit, dass Leckageströme im Bereich einer Schaltelementabdichtung bzw. einer Abdichtung des Kolbenraumes eines Schaltelementes größer sind als das durch die hydraulische Vorbefüllung zugeführte Hydraulikfluidvolumen bzw. das nachgeführte Vorbefüllvolumen.

Ein derartiges Entleer- bzw. Leckageverhalten eines Schaltelementes oder ein so genanntes Luftaufnahmeverhalten eines Schaltelementes wird mittels der Überwachungsfunktion theoretisch abgebildet. Das Schaltelement wird bei Ermittlung eines Füllgrades des Kolbenraumes des Schaltelementes kleiner als ein Schwellwert, unterhalb dem eine unzureichende Füllung eines Schaltelementes vorliegt und von dem ausgehend eine beispielsweise durch eine Zuschaltanforderung des Schaltelementes ausgelöste vollständige Befüllung des Schaltelementes nicht im gewünschten Umfang gewährleistet ist, während des Schrittes S5 in der vorbeschriebenen Art und Weise ohne den geöffneten Zustand des Schaltelementes zu verlassen für die Zeitdauer mit dem Druckfüllwert beaufschlagt und der Kolbenraum des Schaltelementes wird in einen vollständig mit Hydraulikfluid befüllten Zustand, das heißt ohne Luftansammlungen, überführt.

Das Entleer-, Leckage- und Luftaufnahmeverhalten eines Schaltelementes ist dabei von verschiedenen Einflussgrößen, wie den geometrischen Verhältnissen, einer Drehzahl des Schaltelementes, einer Betriebstemperatur des Automatgetriebes bzw. des Hydraulikfluides, einer einen Verschleiß wiedergebenden Getriebelaufzeit, einer über Befülladaptionen ermittelten Toleranzlage und dergleichen, abhängig. Diese verschiedenen Einflussgrößen finden vorliegend in der modellhaften Abbildung des Füllgrades des Schaltelementes Eingang und können zusätzlich bei einer Adaption bzw. einer betriebszustandsabhängigen Anpassung der Schwellwerte der Füllgrade der Schaltelemente berücksichtigt werden.

Wird eines der nicht betätigten Schaltelemente beispielsweise durch einen angeforderten Schaltvorgang bzw. einer anderen Getriebefunktion befüllt bzw. in geschlossenen Zustand überführt und zugeschaltet, wird die Nachbildung des Füllgrades dieses Schaltelementes über die Überwachungsfunktion neu gestartet, wenn eine Abschaltanforderung dieses Schaltelementes vorliegt.

Mit dem vorbeschriebenen Verfahren wird nunmehr erkannt, dass ein Schaltelement während einer definierten Zeit nicht geschaltet bzw. in nicht betätigtem Zustand betrieben wird und dass für eine ausreichende Befüllung eines derartigen Schaltelementes ungünstige Randbedingungen, wie eine ungünstige Temperatur, eine nicht ausreichende Schaltelementdrehzahl, eine notwendige Erstbefüllung im Fahrzyklus, eine ungünstige Toleranzlage, ein erhöhter Verschleiß und dergleichen, vorliegen, die ein Unterschreiten der Schwellwerte eines Füllgrades zur Folge haben.

Bei einem derartigen Betriebszustandsverlauf des Automatgetriebes und bei Vorliegen derartiger ungünstiger Randbedingungen wird ein Vorbefülldruck bzw. ein dem Grunddruckniveau äquivalenter Betätigungsdruck eines Schaltelementes oder mehrerer Schaltelemente mittels einer überlagerten Druckvorgabe über das Ansteuerungssystem des Schaltelementes bzw. das Hydrauliksystem des Automatgetriebes für die Zeitdauer auf den Druckfüllwert angehoben. Dies führt zu einer Erhöhung des dem Schaltelement zugeführten Hydraulikfluidvolumenstroms. Damit wird ein Leerlaufen des Schaltelementes vermieden bzw. das Schaltelement wird über eine erhöhte Vorbefüllung, die von einer elektrohydraulischen Ansteuerung eingestellt wird, entsprechend befüllt. Die Erhöhung des Befülldrucks vom Grunddruckniveau auf den Druckfüllwert ist vorteilhafter Weise schaltelementselektiv durchführbar und nur jeweils für das Schaltelement der in geöffnetem Zustand vorliegenden Schaltelemente vorzusehen, welches aufgrund des aktuellen Betriebszustandes des Automatgetriebes mit zunehmender Betriebsdauer im nicht betätigten Zustand mit hoher Wahrscheinlichkeit leer laufen wird.

Nach Ablauf der Zeitdauer wird der Betätigungsdruck wieder auf das Grunddruckniveau abgesenkt und der Füllgrad ermittelt, wobei der Betätigungsdruck bei einem erneuten Unterschreiten des Schwellwertes, der vorzugsweise zwischenzeitlich betriebszustandsabhängig variierbar ist, für die ebenfalls betriebszustandsabhängig variierbare Zeitdauer wieder auf den ebenso vorzugsweise in Abhängigkeit verschiedener Betriebszustandsparameter des Automatgetriebes veränderbaren Druckfüllwert angehoben wird, bevor der Betätigungsdruck nach Ablauf der Zeitdauer wieder auf das Grunddruckniveau abgesenkt wird.

Des Weiteren beinhaltet das erfindungsgemäße Verfahren eine zusätzliche Absicherung, dass der erhöhte Befülldruck den eigentlich zum Anlegen des Kolbenelementes an das Lamellenpaket des Schaltelementes notwendigen Druck, den so genannten Fülldruck während einer Füllausgleichphase eines Schaltelementes, nicht überschreitet. Über diese zusätzliche Absicherung ist gewährleistet, dass während des erfindungsgemäßen Verfahrens ein unerwünschtes bzw. unerlaubtes Zuschalten des "nachbefüllten" Schaltelementes sicher unterbleibt. Zudem ist über eine geeignete Einstellung des Druckfüllwertes gewährleistet, dass eine Übertragungsfähigkeit eines Schaltelementes in einem Bereich einstellbar ist, in dem noch keine unerlaubte Schleppmomenterhöhung im Schaltelement auftritt. Dadurch ist eine Beeinträchtigung eines Getriebewirkungsgrades auf einfache Art und Weise vermieden.

In Abhängigkeit des jeweils vorliegenden Anwendungsfalles entspricht der Druckfüllwert einem Produkt aus einem Faktor, dessen Wert kleiner als 1 ist, und dem Fülldruckes des betreffenden Schaltelementes. Dabei kann der Fülldruck als Festwert oder in Abhängigkeit verschiedener Betriebszustandsparameter des Automatgetriebes, wie der Getriebeöltemperatur, als veränderbarer Wert vorgegeben werden. Darüber hinaus besteht auch die Möglichkeit, den Fülldruck als Absolutwert mit zusätzlicher Begrenzung auf einen Maximalwert, der höchstens dem Fülldruck entspricht, in Form eines Festwertes oder als veränderbaren Wert, der in Abhängigkeit weiterer Betriebszustandsparameter variiert, zur Verfügung zu stellen.

Es liegt im Ermessen des Fachmannes, das vorbeschriebene Ausführungsbeispiel dahingehend abzuändern, dass auch Schaltelemente in nicht betätigtem Zustand über eine elektrohydraulische Ansteuerung in vorbeschriebener Art und Weise nachbefüllt werden, die in einem Automatgetriebe ohne hydraulische Vorbefüllung angeordnet sind, wobei dieser Unterschied vorzugsweise in Form einer geänderten Nachbildung des Entleerverhaltens eines oder mehrerer Schaltelemente des Automatgetriebes ohne Vorbefüllung abbildbar ist.

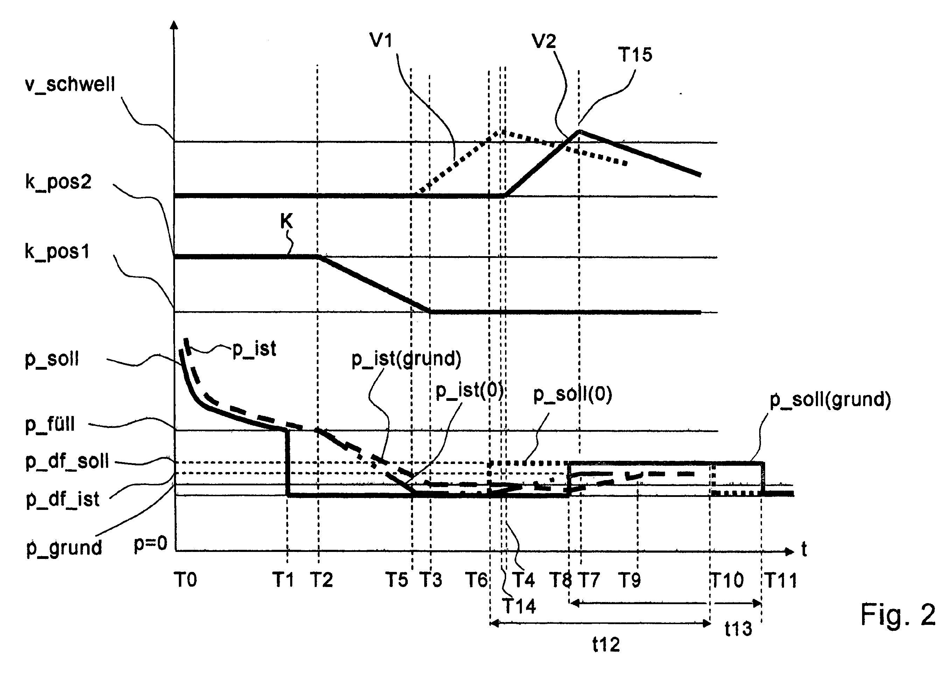

Fig. 2 zeigt mehrere Verläufe verschiedener Betriebszustandsparameter eines Schaltelementes eines Automatgetriebes über der Zeit t, welche sich aufgrund der erfindungsgemäßen Betriebsweise des Automatgetriebes einstellen.

Zu einem Zeitpunkt T0 liegt eine Anforderung zum Einstellen eines bestimmten Betriebszustandes im Automatgetriebe vor, wobei zur Darstellung des angeforderten Betriebszustandes ein zugeschaltetes Schaltelement in geöffneten Zustand zu überführen ist. Hierfür wird ein Soll-Betätigungsdruck p_soll in der in Fig. 2 dargestellten Art und Weise bis zu einem Zeitpunkt T1 auf den Fülldruck p_füll abgesenkt und zum Zeitpunkt T1 sprungartig auf Null gesetzt. Der Ist-Betätigungsdruck p_ist folgt dem Soll-Betätigungsdruck p_soll und erreicht zum Zeitpunkt T2 den Fülldruck p_füll.

Ist das Automatgetriebe mit der vorbeschriebenen hydraulischen Vorbefüllung auf dem Grunddruckniveau ausgeführt, sinkt der Ist-Betätigungsdruck p_ist dem Verlauf p_ist(grund) folgend nach dem Zeitpunkt T2 bis zum Zeitpunkt T3 rampenförmig auf das Grunddruckniveau p_grund ab und verbleibt bis zu einem Zeitpunkt T4 auf diesem Niveau. Ist das Automatgetriebe dagegen ohne die hydraulische Vorfüllung auf dem Grunddruckniveau p_grund ausgeführt, folgt der Ist-Betätigungsdruck p_ist dem Verlauf p_ist(0) und ist zu einem Zeitpunkt T5, der vor dem Zeitpunkt T3 liegt, gleich Null.

Bis zum Zeitpunkt T2 befindet sich das Kolbenelement des Schaltelementes in seiner zweiten Endlage, welche zu einem geschlossenen Zustand des Schaltelementes äquivalent ist, wobei die Kolbenposition des Kolbenelementes in Fig. 2 durch den Verlauf K wiedergegeben ist und die zweite Endstellung durch das Bezugszeichen k_pos2 und die erste Endstellung des Kolbenelementes, die zum geöffneten Zustand des Schaltelementes äquivalent ist, durch das Bezugszeichen k_pos1 näher gekennzeichnet ist. Zwischen den Zeitpunkten T2 und T3 wird das Kolbenelement ausgehend von der zweiten Endlage k_pos2 in Richtung der ersten Endlage k_pos1 des Kolbenelementes von der Federkraft der am Kolbenelement angreifenden Federeinrichtung und entgegen der während der Kolbenbewegung wirkenden Reibkraft aufgrund des im Kolbenraum absinkenden Ist-Betätigungsdruckes p_ist(grund) bzw. p_ist(0) verschoben, wobei das Kolbenelement die erste Endstellung k_pos1 zum Zeitpunkt T3 erreicht.

Zum Zeitpunkt T5, zu dem der Ist-Betätigungsdruck p_ist(0) des Schaltelementes ohne hydraulische Vorbefüllung auf dem Grunddruckniveau p_grund gleich Null ist, wird über die Überwachungsfunktion ein durch den Füllgradverlauf V1 zeitlich verändernder Füllgrad des Kolbenraumes des Schaltelementes ermittelt, wobei über die Überwachungsfunktion zu einem Zeitpunkt T6 ein Unterschreiten eines Schwellwertes v_schwell des Füllgrades des Schaltelementes ermittelt wird.

Die Ermittlung eines Füllgrades kleiner als der Schwellwert v_schwell des Füllgrades des Schaltelementes führt zu einem Anheben des Soll-Betätigungsdruckes p_soll in der durch den Verlauf p_soll(0) für das ohne die hydraulische Vorbefüllung betätigte Schaltelement auf den Soll-Druckfüllwert p_df_soll, so dass der Ist-Betätigungsdruck p_ist (0) des ohne die hydraulische Vorbefüllung auf dem Grunddruckniveau p_grund betätigten Schaltelementes auf den Ist-Druckfüllwert p_df_ist zum Zeitpunkt T7 ansteigt.

Entsprechend erfolgt die Vorgehensweise bei dem Schaltelement, wenn dieses zusätzlich über die hydraulische Vorbefüllung auf den Grunddruckniveau p_grund in nicht betätigtem Zustand mit Hydraulikfluid versorgt wird. Der Soll-Bestätigungsdruck p_soll(grund) wird zu einem Zeitpunkt T8 auf den Solldruckfüllwert p_df_soll angehoben, womit der zum Zeitpunkt T8 das Grunddruckniveau unterschreitende Ist-Betätigungsdruck p_ist(grund) in der in Fig. 2 dargestellten Art und Weise bis zu einem Zeitpunkt T9 auf den Ist-Druckfüllwert p_df_ist ansteigt.

Die Druckanhebung des Soll-Betätigungsdruckes p_soll(0) bzw. p_soll(grund) auf den Solldruckfüllwert p_df_soll führt unabhängig von der hydraulischen Vorbefüllung auf dem Grunddruckniveau jeweils zu einem Ansteigen des Füllgrades bzw. zu einem Absinken des Verlaufes V1 bzw. eines Verlaufes V2, der den zeitlichen Verlauf eines Füllgrades eines Schaltelementes bei zusätzlicher hydraulischer Vorbefüllung auf dem Grunddruckniveau p_grund graphisch wiedergibt, in der in Fig. 2 nach dem Zeitpunkt T14 bzw. T15 gezeigten Art und Weise.

Der Soll-Betätigungsdruck p_soll(0) des ohne die hydraulische Vorbefüllung auf dem Grunddruckniveau p_grund betätigten Schaltelementes wird zu einem Zeitpunkt T10 wieder auf Null reduziert, was ein zeitlich verzögertes Absinken des Ist-Betätigungsdruckes p_ist (0) des Schaltelementes auf den Wert Null und ein wiederholtes Entleeren des Schaltelementes zur Folge hat.

Der Soll-Betätigungsdruck p_soll(grund) des mit der hydraulischen Vorbefüllung auf dem Grunddruckniveau betätigten Schaltelementes wird zu einem Zeitpunkt T11 sprungartig auf Null gesetzt, was ebenfalls ein zeitlich verzögertes Absinken des Ist-Betätigungsdruckes p_ist(grund) des mit der Vorbefüllung auf dem Grunddruckniveau p_grund betätigten Schaltelements auf das Grunddruckniveau p_grund zur Folge hat.

Hieran anschließend sinkt der Füllgrad des Schaltelementes mit zunehmender Zeit t ab, bis der Schwellwert v_schwell erneut unterschritten wird und der Kolbenraum des Schaltelements in der vorbeschriebenen Art und Weise mit einem dem Druckfüllwert entsprechenden Betätigungsdruck zur Nachbefüllung beaufschlagt wird.

Der Soll-Druckfüllwert p_df_soll und der Ist-Druckfüllwert p_df_ist sind kleiner als der Fülldruck p_füll des Schaltelementes während einer Schnellfüllphase, womit eine Bewegung des Kolbenelementes des Schaltelementes während der in nicht betätigtem Zustand des Schaltelementes vorgesehenen Nachbefüllung sicher vermieden ist.

Die Nachbefüllung des nicht betätigten Schaltelementes wird zumindest für eine Zeitdauer t12, welche zum Zeitpunkt T6 startet, und zum Zeitpunkt T10 endet oder für eine Zeitdauer T13, welche zum Zeitpunkt T8 beginnt und zum Zeitpunkt T11 endet, mit dem Ist-Druckfüllwert p_df_ist beaufschlagt und dessen Kolbenraum dabei derart nachbefüllt, dass im Kolbenraum des Schaltelementes eventuell vorliegende Luftansammlungen sicher aus diesem verdrängt werden.

Bei dem erfindungsgemäßen Verfahren wird nach dem Abschalten eines Schaltelementes und nach Ablauf eines vorgebbaren Zeitraumes ein nicht betätigtes bzw. sich in geöffnetem Zustand befindendes Schaltelement mit einem Betätigungsdruck bzw. einem Druckfüllwert kleiner als ein Fülldruck einer Füllausgleichsphase beaufschlagt, der größer als Null oder größer als ein Grunddruckniveau einer hydraulischen Vorbefüllung ist, welches vorzugsweise 0,2 bar beträgt. Das Grunddruckniveau entspricht einem Druck, zu dem in das Schaltelement bzw. in die Schaltelemente ein Hydraulikfluidvolumenstrom eingeleitet wird, der normalerweise größer ist als die über die Leckagen des Schaltelementes und des Hydrauliksystems abfließende Hydraulikfluidmenge.

Gleichzeitig ist das Grunddruckniveau niedriger als der Fülldruck während einer Füllausgleichphase, um ein Anlegen eines Kolbenelementes an einem Lamellenpaket und somit ein Ansteigen der Übertragungsfähigkeit des Schaltelementes zu vermeiden. Das Grunddruckniveau wird im Getriebe bzw. im Hydrauliksystem des Getriebes über eine entsprechende Ventileinrichtung aufrechterhalten und hilft ein Leerlaufen des Hydrauliksystems auf einfache Art und Weise zu verhindern.

Dabei ist die Zeitdauer, während der ein geöffnetes Schaltelement mit dem Druckfüllwert beaufschlagt wird, entweder während des Betriebes des Automatgetriebes über die Überwachungsfunktion theoretisch ermittelbar oder am Prüfstand empirisch bestimmbar und vorzugsweise über der Lebensdauer des Automatgetriebes adaptierbar, um einen Verschleiß des Lamellenpaketes eines Schaltelementes berücksichtigen zu können. Gleiches gilt für den vorgebbaren Zeitraum, nach dessen Ablauf das Schaltelement zum wiederholten Male mit dem Druckfüllwert beaufschlagt wird in dessen Abhängigkeit die so genannte Nachbefüllung des Schaltelementes bei Bedarf mehrfach hintereinander durchgeführt wird.

### Bezugszeichen

- K: Verlauf
- k_pos1, k_pos1: Endstellung des Kolbenelementes
- p_ist: Ist-Betätigungsdruck
- p_soll: Soll-Betätigungsdruck
- p_füll: Fülldruck
- p_df_ist: Ist-Druckfüllwert
- p_df_soll: Soll-Druckfüllwert
- p_grund: Grunddruckniveau
- S1 bis S5: Schritt
- t: Zeit
- t12, t13: Zeitraum
- T0 bis T11: diskreter Zeitpunkt
- T14, T15: diskreter Zeitpunkt
- V1, V2: Verlauf
- v_schwell: Schwellwert

## Patentansprüche

1. Verfahren zum Betreiben eines Automatgetriebes eines Fahrzeuges mit mehreren reibschlüssigen Schaltelementen, deren Übertragungsfähigkeiten in Abhängigkeit von über ein Hydrauliksystem einstellbaren Betätigungsdrükken (p_ist) variierbar sind, mittels welchen jeweils ein Kolbenelement eines Schaltelemmentes entgegen der Federkraft einer Federeinrichtung und einer an dem Kolbenelement angreifenden Reibkraft ausgehend von einer zu einem geöffneten Zustand des Schaltelementes äquivalenten ersten Endstellung in Richtung einer zu einem geschlossenen Zustand des Schaltelementes äquivalenten zweiten Endstellung verschiebbar ist, wobei wenigstens ein Teil der Schaltelemente jeweils zur Darstellung eines angeforderten Betriebszustandes des Automatgetriebes mit dem dafür vorgesehen Betätigungsdruck beaufschlagt wird und eine damit korrespondierende Übertragungsfähigkeit aufweist, während der andere Teil der Schaltelemente im wesentlichen mit Betätigungsdrücken beaufschlagt wird, zu den deren Übertragungsfähigkeiten gleich Null sind und zu den diese jeweils in geöffnetem Zustand vorliegen, **dadurch gekennzeichnet, dass** der Betätigungsdruck wenigstens eines Schaltelementes der in geöffnetem Zustand vorliegenden Schaltelemente zumindest für eine Zeitdauer (t12; t13) mit einem Druckfüllwert (p_df_ist) kleiner als ein fülldruck (p_füll) einer Füllausgleichsphase beaufschlagt und anschließen wieder auf ein dem geöffneten Zustand des Schaltelementes äquivalentes Druckniveau abgesenkt wird, wenn das Kolbenelement des betreffenden Schaltelementes sich in seiner ersten Endstellung befindet, wobei bei an einer Wirkfläche des Kolbenelementes anliegendem Druckfüllwert (p_df_ist) an dem Kolbenelement eine aus dem Druckfüllwert (p_df_ist), der Federkraft und der Reibkraft resultierende Gesamtkraftkomponente derart angreift, dass eine Bewegung des Kolbenelementes ausgehend von seiner ersten Endlage in Richtung seiner zweiten Endlage unterbleibt, und wobei das zu dem geöffneten Zustand des Schaltelementes äquivalente Volumen eines Kolbenraumes des Schaltelementes nach Ablauf der Zeitdauer (t12; t13) wenigstens annähernd vollständig mit Hydraulikfluid befüllt ist.

2. Verfahren nach Anspruch 1, **dadurch gekennzeichnet, dass** das wenigstens eine Schaltelement der in geöffnetem Zustand vorliegenden Schaltelemente mit einem einem Grunddruckniveau (p_grund) des Hydrauliksystems entsprechenden Betätigungsdruck beaufschlagt wird, der kleiner als der Druckfüllwert (p_df_ist) ist.

3. Verfahren nach Anspruch 1 oder 2, **dadurch gekennzeichnet, dass** das wenigstens eine Schaltelement der in geöffnetem Zustand vorliegenden Schaltelemente nach Ablauf eines vorgebbaren Zeitraumes wiederum für eine vorgebbare Zeitdauer (t12; t13) mit dem Druckfüllwert (p_df_ist) beaufschlagt wird und der Betätigungsdruck nach Ablauf der Zeitdauer (t12; t13) auf ein dem geöffneten Zustand des Schaltelementes äquivalentes Druckniveau eingestellt wird.

4. Verfahren nach Anspruch 3, **dadurch gekennzeichnet, dass** die Zeitdauer (t12; t13) und/oder der Zeitraum in Abhängigkeit verschiedener Betriebszustandsparameter des Automatgetriebes und/oder in Abhängigkeit einer Lebensbetriebsdauer des Automatgetriebes und/oder des betreffenden Schaltelementes adaptiert wird.

5. Verfahren nach einer der Ansprüche 1 bis 4, **dadurch gekennzeichnet, dass** im Betrieb des Automatgetriebes eine Überwachungsfunktion aktiviert ist, mittels der jeweils ein Befüllzustand der Schaltelemente bestimmbar ist, wobei bei Ermittlung eines Füllgrades eines geöffneten Schaltelementes, der kleiner als ein vorgebbarer Schwellwert (v_schwell) ist, der Betätigungsdruck des Schaltelementes für die Zeitdauer (t12; t13) auf den Druckfüllwert (p_df_ist) angehoben wird.

6. Verfahren nach Anspruch 5, **dadurch gekennzeichnet, dass** der Befüllzustand der Schaltelemente bei aktivierter Überwachungsfunktion jeweils mittels einer modellhaften Abbildung des Entleervorganges des Kolbenraumes eines Schaltelementes bestimmt wird.

7. Verfahren nach einem der Ansprüche 1 bis 6, **dadurch gekennzeichnet, dass** der Druckfüllwert (p_df_ist) dem Produkt aus einem vorgebbaren Faktor und dem vorzugsweise betriebszustandsabhängig variierenden Fülldruck (p_füll) entspricht.

8. Verfahren nach einem der Ansprüche 1 bis 6, **dadurch gekennzeichnet, dass** der Druckfüllwert (p_df_ist) in Abhängigkeit verschiedener Betriebeszustandsparameter des Automatgetriebes ermittelt wird.

9. Verfahren nach einem der Ansprüche 1 bis 8, **dadurch gekennzeichnet, dass** während eines Überprüfungsschrittes (S2) verifiziert wird, ob eine Anforderung für eine Schaltung vorliegt, wobei das Verfahren bei positivem Abfrageergebnis beendet wird.

10. Verfahren nach Anspruch 9, **dadurch gekennzeichnet, dass** bei negativem Abfrageergebnis des Überprüfungsschrittes (S2) während eines weiteren Überprüfungsschrittes (S3) verifiziert wird, ob ein Leerlaufen des Schaltelementes zu erwarten ist, wobei das Verfahren bei negativem Abfrageergebnis beendet wird.

11. Verfahren nach Anspruch 9 oder 10, **dadurch gekennzeichnet, dass** das Schaltelement bei positivem Abfrageergebnis des weiteren Abfrageschrittes (S3) mit dem Druckfüllwert (p_df_ist) beaufschlagt wird.

## Claims

1. Method for operating an automatic transmission of a vehicle having a plurality of frictionally locking shift elements, the transmission capabilities of which can be varied as a function of activation pressures (p_act) which can be adjusted by means of a hydraulic system and by means of which in each case a piston element of a shift element can be displaced counter to the spring force of a spring device and to a friction force acting on the piston element, from a first end position, equivalent to an opened state of the shift element, in the direction of a second end position, equivalent to a closed state of the shift element, wherein in order to bring about a requested operating state of the automatic transmission at least some of the shift elements are in each case subjected to the activation pressure provided for that purpose, and has a transmission capability which corresponds thereto, while the other shift elements are essentially subjected to activation pressures with respect to which their transmission capabilities are equal to zero and with respect to which said shift elements are in each case in the opened state, **characterized in that** the activation pressure of at least one shift element of the shift elements which are in the opened state is subjected, at least for a time period (t12; t13) to a pressure filling value (p_df_act) which is lower than a filling pressure (p_fill) of a filling equalization phase, and is subsequently lowered again to a pressure level which is equivalent to the opened state of the shift element if the piston element of the respective shift element is in a first end position, wherein in the case of a pressure filling value (p_df_act) which is at an active face of the piston element a total force component, which results from the pressure filling value (p_df_act), the spring force and the friction force, acts on the piston element in such a way that a movement of the piston element from its first end position in the direction of its second end position does not occur, and wherein the volume of a piston space of the shift element which is equivalent to the opened state of the shift element is filled at least virtually completely with hydraulic fluid after the time period (t12; t13) expires.

2. Method according to Claim 1, **characterized in that** the at least one shift element of the shift elements which are in the opened state is subjected to an activation pressure which corresponds to a basic pressure level (p_basic) of the hydraulic system which is lower than the pressure filling value (p_df_act).

3. Method according to Claim 1 or 2, **characterized in that** the at least one shift element of the shift elements which are in the opened state is in turn subjected to the pressure filling value (p_df_act) for a predefinable time period (t12; t13) after a predefinable period of time has expired, and after the time period (t12; t13) has expired the activation pressure is set to a pressure level which is equivalent to the opened state of the shift element.

4. Method according to Claim 3, **characterized in that** the time period (t12; t13) and/or the period of time is adapted as a function of various operating state parameters of the automatic transmission and/or as a function of a service life of the automatic transmission and/or of the respective shift element.

5. Method according to one of Claims 1 to 4, **characterized in that** during operation of the automatic transmission, a monitoring function is activated by means of which in each case a filling state of the shift elements can be determined, wherein when a filling level of an opened shift element is determined which is lower than a predefinable threshold value (v_thresh), the activation pressure of the shift element is raised to the pressure filling value (p_df_act) for the time period (t12; t13).

6. Method according to Claim 5, **characterized in that** the filling state of the shift elements when the monitoring function is activated is determined in each case by modelling of the emptying process of the piston space of a shift element.

7. Method according to one of Claims 1 to 6, **characterized in that** the pressure filling value (p_df_act) corresponds to the product of a predefinable factor and the filling pressure (p_fill) which preferably varies as a function of the operating state.

8. Method according to one of Claims 1 to 6, **characterized in that** the pressure filling value (p_df_act) is determined as a function of various operating state parameters of the automatic transmission.

9. Method according to one of Claims 1 to 8, **characterized in that** during a checking step (S2) it is verified whether there is a request for a shifting operation, wherein in the case of a positive interrogation result the method is ended.

10. Method according to Claim 9, **characterized in that** in the case of a negative interrogation result of the checking step (S2) it is verified during a further checking step (S3) whether idling of the shift element is to be expected, wherein in the case of a negative interrogation result the method is ended.

11. Method according to Claim 9 or 10, **characterized in that** in the case of a positive interrogation result of the further interrogation step (S3) the shift element is subjected to the pressure filling value (p_df_act).

## Revendications

1. Procédé destiné au fonctionnement d'une boîte de vitesse automatique d'un véhicule comprenant plusieurs éléments de changement de vitesse à engagement par friction dont les capacités de transmission peuvent être modifiées en fonction de pressions d'actionnement (p_ist) réglables au moyen d'un système hydraulique, au moyen desquelles un élément de piston respectif d'un élément de changement de vitesse peut être coulissé à l'encontre de la force de ressort d'un dispositif de ressort et d'une force de friction agissant sur l'élément de piston à partir d'une première position finale équivalente à un état ouvert de l'élément de changement de vitesse en direction d'une deuxième position finale équivalente à un état fermé de l'élément de changement de vitesse, au moins une partie des éléments de changement de vitesse étant respectivement sollicités, pour constituer un état de fonctionnement requis de la boîte de vitesse automatique, par la pression d'actionnement prévue à cet effet et présentant une capacité de transmission correspondant à celle-ci, tandis que l'autre partie des éléments de changement de vitesse sont sollicités essentiellement par des pressions d'actionnement jusqu'auxquelles leurs capacités de transmission sont nulles et jusqu'auxquelles ils se trouvent respectivement à l'état ouvert, **caractérisé en ce que** la pression d'actionnement d'au moins un élément de changement de vitesse parmi les éléments de changement de vitesse se trouvant à l'état ouvert est sollicitée, au moins pendant une durée (t12 ; t13), par une valeur de pression de remplissage (p_df_ist) inférieure à une pression de remplissage (p_füll) d'une phase d'équilibrage de remplissage et ensuite de nouveau abaissée à un niveau de pression équivalent à l'état ouvert de l'élément de changement de vitesse lorsque l'élément de piston de l'élément de changement de vitesse concerné se trouve dans sa première position finale, une composante de force totale résultant de la valeur de pression de remplissage (p_df_ist), de la force de ressort et de la force de friction agissant sur l'élément de piston lorsqu'une valeur de pression de remplissage (p_df_ist) s'applique sur une surface active de l'élément de piston, de telle sorte qu'un déplacement de l'élément de piston à partir de sa première position finale en direction de sa deuxième position finale n'ait pas lieu, et le volume, équivalent à l'état ouvert de l'élément de changement de vitesse, d'une chambre de piston de l'élément de changement de vitesse étant rempli au moins approximativement entièrement de fluide hydraulique après l'expiration de la durée (t12 ; t13).

2. Procédé selon la revendication 1, **caractérisé en ce que** l'au moins un élément de changement de vitesse parmi les éléments de changement de vitesse se trouvant à l'état ouvert est sollicité par une pression d'actionnement correspondant à un niveau de pression de base (p_grund) du système hydraulique qui est inférieure à la valeur de pression de remplissage (p_df_ist).

3. Procédé selon la revendication 1 ou 2, **caractérisé en ce que** l'au moins un élément de changement de vitesse parmi les éléments de changement de vitesse se trouvant à l'état ouvert est sollicité, après l'expiration d'un laps de temps pouvant être prédéfini, de nouveau pendant une durée (t12 ; t13) pouvant être prédéfinie, par une valeur de pression de remplissage (p_df_ist) et la pression d'actionnement est réglée à un niveau de pression équivalent à l'état ouvert de l'élément de changement de vitesse après l'expiration de la durée (t12 ; t13).

4. Procédé selon la revendication 3, **caractérisé en ce que** la durée (t12 ; t13) et/ou le laps de temps sont adaptés en fonction de divers paramètres d'état de fonctionnement de la boîte de vitesse automatique et/ou en fonction d'une durée de vie et de fonctionnement de la boîte de vitesse automatique et/ou de l'élément de changement de vitesse concerné.

5. Procédé selon l'une quelconque des revendications 1 à 4, **caractérisé en ce que** lors du fonctionnement de la boîte de vitesse automatique une fonction de contrôle est activée, au moyen de laquelle un état de remplissage respectif des éléments de changement de vitesse peut être déterminé et, lors de la détection d'un degré de remplissage d'un élément de changement de vitesse ouvert qui est inférieur à une valeur seuil (v_schwell) pouvant être prédéfinie, la pression d'actionnement de l'élément de changement de vitesse étant augmentée jusqu'à la valeur de pression de remplissage (p_df_ist) pendant la durée (t12 ; t13).

6. Procédé selon la revendication 5, **caractérisé en ce que** l'état de remplissage des éléments de changement de vitesse est déterminé, lorsque la fonction de contrôle est activée, à chaque fois au moyen d'une représentation modélisée de l'opération de vidange de la chambre de piston d'un élément de changement de vitesse.

7. Procédé selon l'une quelconque des revendications 1 à 6, **caractérisé en ce que** la valeur de pression de remplissage (p_df_ist) correspond au produit d'un facteur pouvant être prédéfini et de la pression de remplissage (p_füll) variant de préférence en fonction de l'état de fonctionnement.

8. Procédé selon l'une quelconque des revendications 1 à 6, **caractérisé en ce que** la valeur de pression de remplissage (p_df_ist) est déterminée en fonction de divers paramètres d'état de fonctionnement de la boîte de vitesse automatique.

9. Procédé selon l'une quelconque des revendications 1 à 8, **caractérisé en ce que** pendant une étape de contrôle (S2) on vérifie si une demande de changement de vitesse est présente, le procédé étant terminé en cas de résultat d'interrogation positif.

10. Procédé selon la revendication 9, **caractérisé en ce qu'**en cas de résultat d'interrogation négatif de l'étape de contrôle (S2), on vérifie pendant une étape de contrôle supplémentaire (S3) si on peut s'attendre à un point mort de l'élément de changement de vitesse, le procédé étant terminé en cas de résultat d'interrogation négatif.

11. Procédé selon la revendication 9 ou 10, **caractérisé en ce que** l'élément de changement de vitesse est sollicité par la valeur de pression de remplissage (p_df_ist) en cas de résultat d'interrogation positif de l'étape d'interrogation supplémentaire (S3).
